(19) Europäisches Patentamt
European Patent Office
Office européen des brevets

(11) Veröffentlichungsnummer: **0 326 011 B1**

(12) # EUROPÄISCHE PATENTSCHRIFT

(45) Veröffentlichungstag der Patentschrift: **02.03.94**

(51) Int. Cl.$^5$: **C09B 62/513**, D06P 1/384

(21) Anmeldenummer: **89100837.7**

(22) Anmeldetag: **19.01.89**

Die Akte enthält technische Angaben, die nach dem Eingang der Anmeldung eingereicht wurden und die nicht in dieser Patentschrift enthalten sind.

(54) **Wasserlösliche Disazoverbindungen, Verfahren zu ihrer Herstellung und ihre Verwendung als Farbstoffe.**

(30) Priorität: **23.01.88 DE 3801997**

(43) Veröffentlichungstag der Anmeldung:
**02.08.89 Patentblatt 89/31**

(45) Bekanntmachung des Hinweises auf die Patenterteilung:
**02.03.94 Patentblatt 94/09**

(84) Benannte Vertragsstaaten:
**BE CH DE ES FR GB IT LI**

(56) Entgegenhaltungen:
**EP-A- 0 128 316**
**EP-A- 0 201 868**
**EP-A- 0 219 080**
**FR-A- 1 558 679**

(73) Patentinhaber: **HOECHST AKTIENGESELLSCHAFT**

**D-65926 Frankfurt(DE)**

(72) Erfinder: **Hähnle, Reinhard, Dr.**
**Kastanienweg 7a**
**D-6240 Königstein/Taunus(DE)**
Erfinder: **Springer, Hartmut, Dr.**
**Am Erdbeerstein 27**
**D-6240 Königstein/Taunus(DE)**
Erfinder: **Russ, Werner Hubert, Dr.**
**Berliner Strasse 10**
**D-6238 Hofheim am Taunus(DE)**

EP 0 326 011 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Disazofarbstoffe.

Aus dem Beispiel 50 der deutschen Patentschrift Nr. 965 902 und desweiteren aus den US-Patentschriften Nrs. 2 657 205, 4 257 770 und 4 492 654, der britischen Patentschrift Nr. 1 183 661, der deutschen Offenlegungsschrift Nr. 3 113 989 und der europäischen Patentschrift Nr. 0 063 276B sind Disazoverbindungen mit faserreaktiven Farbstoffeigenschaften bekannt, die sich aus der 1-Amino-8-naphthol-3,6-disulfonsäure als bivalenter Kupplungskomponente und mit einer sauer und einer neutral angekuppelten Diazokomponente, von denen mindestens eine eine faserreaktive Gruppe aus der Vinylsulfon-Reihe besitzt, aufgebaut sind.

Es wurden nunmehr neue, wertvolle Disazoverbindungen gefunden, die verbesserte Eigenschaften aufweisen und der allgemeinen Formel (1)

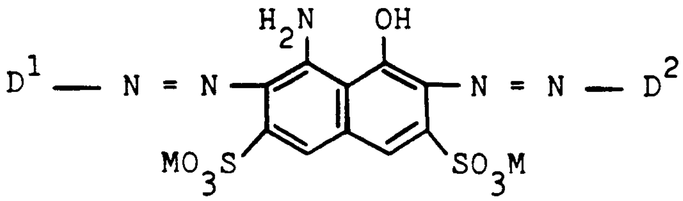

(1)

entsprechen; in dieser bedeuten:

M ist ein Wasserstoffatom oder ein Alkalimetall, wie Natrium, Kalium oder Lithium, oder das Äquivalent eines Erdalkalimetalls, wie des Calciums, bevorzugt ein Wasserstoffatom und insbesondere ein Alkalimetall;

$D^1$ ist ein Rest der allgemeinen Formel (2)

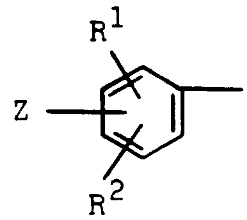

(2)

in welcher

$R^1$ ein Wasserstoff-, Chlor- oder Bromatom oder eine Sulfogruppe, eine Alkylgruppe von 1 bis 4 C-Atomen, wie die Ethylgruppe und insbesondere Methylgruppe, oder eine Alkoxygruppe von 1 bis 4 C-Atomen, wie die Ethoxy- und die Methoxygruppe, ist,

$R^2$ ein Wasserstoff-, Chlor- oder Bromatom oder eine Sulfogruppe, eine Alkylgruppe von 1 bis 4 C-Atomen, wie die Ethylgruppe und insbesondere Methylgruppe, oder eine Alkoxygruppe von 1 bis 4 C-Atomen, wie die Ethoxy- und die Methoxygruppe, ist und

Z eine Gruppe der allgemeinen Formel $X\text{-}SO_2\text{-}$ ist, in welcher

X die Vinylgruppe oder eine $\beta$-Sulfatoethyl-Gruppe bedeutet, oder

Z ein Wasserstoffatom oder eine Sulfogruppe oder eine Gruppe der allgemeinen Formel (3)

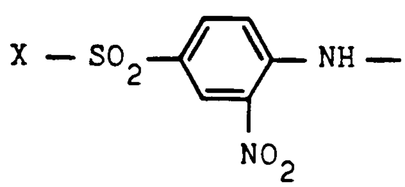

(3)

bedeutet, in welcher X eine der obigen Bedeutungen besitzt;

$D^2$ ist ein Rest der allgemeinen Formel (4)

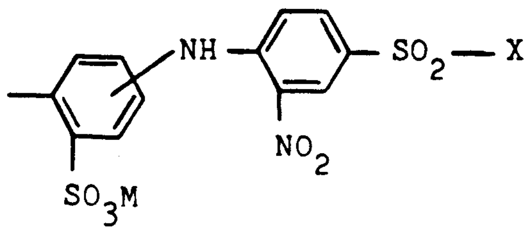

(4)

in welcher M und X eine der obengenannten Bedeutungen besitzt und die Aminogruppe -NH- an den Benzolkern in para-Stellung zur Sulfogruppe $-SO_3M$ oder in para-Stellung zur freien Bindung gebunden ist;

die Formelglieder $D^1$ und $D^2$ und ebenso die Formelglieder $R^1$ und $R^2$ sowie die beiden X können jeweils zueinander gleiche oder voneinander verschiedene Bedeutungen besitzen.

Bevorzugt ist $D^1$ ein Rest der allgemeinen Formel (2), in welcher Z für die Gruppe der Formel $X-SO_2-$ steht. Bevorzugt bedeutet X eine $\beta$-Sulfatoethyl-Gruppe. Sofern Z im Rest der allgemeinen Formel (2) eine Gruppe der allgemeinen Formel (3) bedeutet, ist der Rest der allgemeinen Formel (2) bevorzugt ein Rest der allgemeinen Formel (2a)

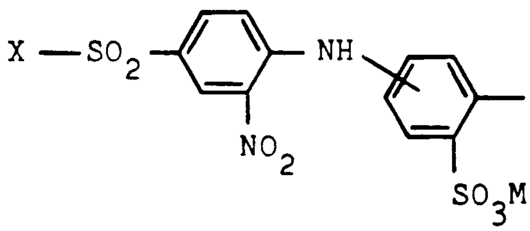

(2a)

in welcher M und X eine der obengenannten Bedeutungen besitzt und die Aminogruppe -NH- an den Benzolkern in para-Stellung zur Sulfogruppe $-SO_3M$ oder in para-Stellung zur freien Bindung gebunden ist.

Ist Z im Rest der allgemeinen Formel (2) eine Gruppe entsprechend der allgemeinen Formel $X-SO_2-$, so ist $R^1$ bevorzugt ein Wasserstoffatom oder eine Methoxygruppe und $R^2$ bevorzugt ein Wasserstoffatom oder ein Chloratom oder eine Methyl- oder Methoxygruppe.

Insbesondere kann diejenige erfindungsgemäße Disazoverbindung hervorgehoben werden, in welcher $D^1$ die 4-($\beta$-Sulfatoethylsulfonyl)-phenyl-Gruppe und $D^2$ die 2-Sulfo-5-[2'-nitro-4'-($\beta$-sulfatoethylsulfonyl)-phenylamino]-phenyl-Gruppe ist.

Die Substituenten "Sulfo", "Carboxy" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM und Sulfatogruppen Gruppen entsprechend der allgemeinen Formel $-OSO_3M$ , in welchen M eine der obengenannten Bedeutungen besitzt.

Die neuen Azoverbindungen können in saurer Form und in Form ihrer Salze vorliegen. Bevorzugt sind sie in Form ihrer Salze und finden bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin ein Verfahren zur Herstellung der Disazoverbindungen der allgemeinen Formel (1), das dadurch gekennzeichnet ist, daß man eine Monoazoverbindung der allgemeinen Formel (5)

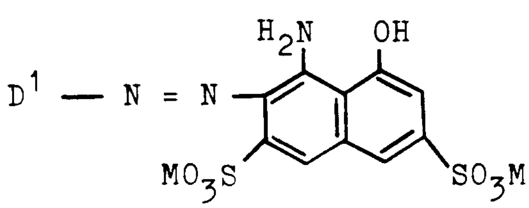

(5)

in welcher $D^1$ und M eine der obengenannten Bedeutungen besitzt, mit einem Diazoniumsalz eines aromatischen Amins der allgemeinen Formel $D^2$-$NH_2$ mit $D^2$ einer der obengennanten Bedeutungen bei einem pH-Wert zwischen 4 und 7,5, vorzugsweise zwischen 5 und 6,5, in wäßrigem oder wäßrig-organischem Medium, jedoch bevorzugt wäßrigem Medium, kuppelt. In der Regel führt man die Kupplungsreaktion bei einer Temperatur zwischen 0 und 30 °C durch.

Disazoverbindungen der allgemeinen Formel (1), in welchen der/die Formelrest(e) X jeweils für eine Vinylgruppe stehen, können erfindungsgemäß auch in der Weise hergestellt werden, daß man eine Disazoverbindung der allgemeinen Formel (1), in welcher eine oder beide der Formelreste X eine $\beta$-Sulfatoethyl-Gruppe bedeuten, in wäßriger Lösung bei einem pH-Wert zwischen 10 und 12, bevorzugt zwischen 10,5 und 11,5, mit einem Alkali wie Natriumhydroxid, umsetzt. Die Umsetzung erfolgt bei einer Temperatur zwischen 15 und 50 °C, bevorzugt zwischen 20 und 40 °C, wobei die Reaktionszeit in der Regel zwischen 5 und 20 Minuten liegt; bei den höheren Temperaturen innerhalb des angegebenen Temperaturbereiches ist eine kürzere Reaktionszeit innerhalb des angegebenen Zeitbereiches einzuhalten, um eine unvorteilhafte Bildung von $\beta$-Hydroxyethylsulfonyl-Gruppen zu vermeiden.

Die Ausgangsverbindungen der allgemeinen Formel (5) werden nach allgemein bekannten Methoden durch Kupplungsreaktion von 1-Amino-3,6-disulfo-8-naphthol mit dem Diazoniumsalz eines aromatischen Amins der allgemeinen Formel $D^1$-$NH_2$ mit $D^1$ der obengenannten Bedeutung im stark sauren wäßrigen Medium synthetisiert. Die Ausgangsverbindungen entsprechend der allgemeinen Formel $D^1$-$NH_2$ sind zahlreich in der Literatur beschrieben, beispielsweise in der US-Patentschrift Nr. 4 701 523. Ebenso sind die Amino-diphenylamin-verbindungen entsprechend den allgemeinen Formeln $D^2$-$NH_2$ und $D^1$-$NH_2$ mit Z gleich einem Rest der allgemeinen Formel (3) in dieser US-Patentschrift in Spalten 5 und 6 beschrieben oder können analog den dortigen Angaben synthetisiert werden.

Die Abscheidung und Isolierung der erfindungsgemäß hergestellten Disazoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Disazoverbindungen der allgemeinen Formel (1) - im nachfolgenden Verbindungen (1) genannt - haben, wie bereits erwähnt, faserreaktive Farbstoffeigenschaften. Sie können deshalb zum Färben von hydroxygruppenhaltigen und/oder carbonamidgruppenhaltigen Materialien, insbesondere Fasermaterialien, verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der Verbindungen (1) zum Färben von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man eine Verbindung (1) in gelöster Form auf das Substrat aufbringt oder sie darin einbringt und sie auf diesem oder in diesem durch Hitzeeinwirkung und/oder durch Einwirkung eines alkalisch wirkenden Mittels fixiert. Solche Färbe- und Fixierweisen sind sowohl in der Fachliteratur als auch in der Patentliteratur zahlreich beschrieben, wie beispielsweise in der bereits anfangs erwähnten US-Patentschrift Nr. 4 492 654.

Mit den Verbindungen (1) lassen sich sowohl auf carbonamidgruppenhaltigen Materialien als auch auf hydroxygruppenhaltigem Material, wie insbesondere Cellulosefasermaterial, farbstarke marineblaue bis blaustichig schwarze oder grünstichig schwarze oder rein schwarze Färbungen und Drucke mit guten Echtheitseigenschaften herstellen. Neben der guten Lichtechtheit des gefärbten Materials in trockenem Zustand und in mit Trinkwasser oder einer alkalischen oder sauren Schweißlösung befeuchteten Zustand

sind von den guten Naßechtheiten insbesondere die guten Wasch-, Chlorwasser-, Wasser-, Meerwasser-, Säure- und Alkaliechtheiten, sowie die guten sauren und alkalischen Überfärbe- und sauren und alkalischen Schweißechtheiten hervorzuheben. Die Verbindungen (1) zeichnen sich durch einen guten Farbaufbau und durch hohe Fixiergrade aus.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden bei 20 °C aus wäßriger Lösung der Alkalimetallsalze bestimmt.

**Beispiel 1**

Eine wäßrige Suspension mit einem pH-Wert von 1,5 bis 2 von 121 Teilen einer Monoazoverbindung (erhältlich durch saure Kupplungsreaktion äquivalenter Mengen von 1-Amino-3,6-disulfo-8-naphthol und 4-$\beta$-Sulfatoethylsulfonyl-anilin) in etwa 800 Teilen Wasser werden mit der wäßrigen Lösung [Herstellung nachfolgend beschrieben] des Diazoniumsalzes von 102 Teilen 2-Nitro-4-($\beta$-sulfatoethylsulfonyl)-4'-sulfo-3'-amino-diphenylamin versetzt; die Kupplungsreaktion wird bei einem pH-Wert zwischen 6 und 6,5 und einer Temperatur zwischen 5 und 25 °C durchgeführt [das Diazoniumsalz wird hergestellt, indem man 102 Teile 2-Nitro-4-($\beta$-sulfatoethylsulfonyl)-3'-amino-diphenylamin-4'-sulfonsäure in 1000 Teilen Wasser bei einem pH-Wert zwischen 6,0 und 6,5 unter Zugabe von Natriumbicarbonat löst, sodann 36,2 Teile einer 40%igen wäßrigen Natriumnitritlösung und 300 Teile Eis hinzugibt und sodann schnell 100 Teile einer 31%igen wäßrigen Salzsäurelösung einrührt; man rührt noch eine Stunde bei 0 bis 5 °C nach und zerstört überschüssige salpetrige Säure in üblicher Weise mit etwas Amidosulfonsäure].

Nach Beendigung der zweiten Kupplungsreaktion stellt man den Reaktionsansatz mit Phosphorsäure auf einen pH-Wert von 5 und dampft ihn unter reduziertem Druck zur Trockne ein. Man erhält ein schwarzes, elektrolytsalzhaltiges Pulver des Natriumsalzes der Verbindung der Formel

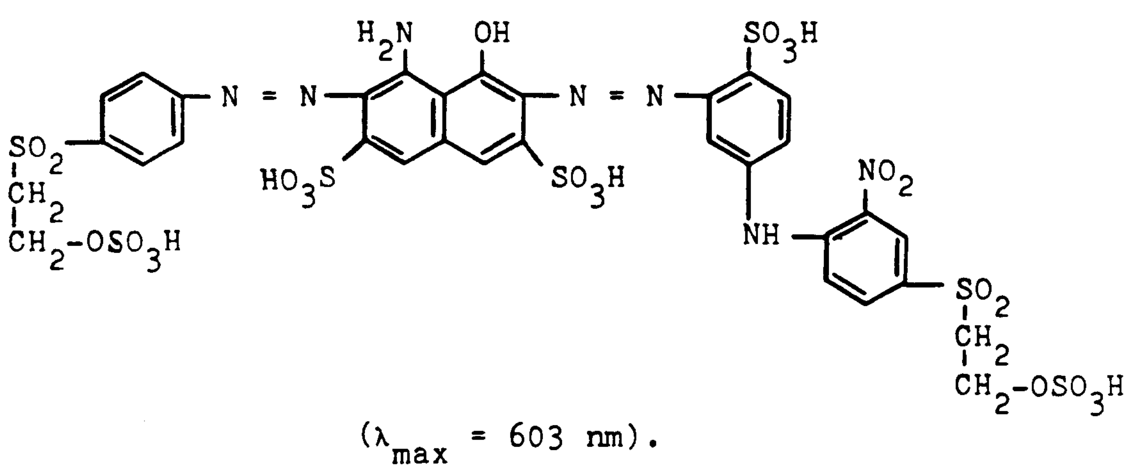

($\lambda_{max}$ = 603 nm).

Die erfindungsgemäße Disazoverbindung zeigt sehr gute faserreaktive Farbstoffeigenschaften und liefert auf den in der Beschreibung genannten Materialien, wie insbesondere Cellulosefasermaterialien, beispielsweise Baumwolle, nach den in der Technik üblichen Applikations- und Fixiermethoden, insbesondere den für faserreaktive Farbstoffe üblichen Anwendungsbedingungen, marineblaue Färbungen mit guten Echtheitseigenschaften, von denen insbesondere die guten Lichtechtheiten der Färbungen in trockenem Zustand als auch in mit Trinkwasser oder einer Schweißlösung befeuchtetem Zustand sowie die guten Wasch- und Chlorechtheiten hervorgehoben werden können.

**Beispiel 2**

Man geht von der erfindungsgemäßen Disazoverbindung des Beispieles 1 aus und löst 100 Teile dieser Disazoverbindung in 500 Teilen Wasser von 20 bis 25°C. Durch Zugabe einer 33%igen wäßrigen Natronlauge stellt man einen pH-Wert von 11 ein und hält diesen während 10 Minuten bei einer Temperatur von 25°C. Sodann versetzt man den Ansatz mit Eisessig zwecks Einstellung eines pH-Wertes von 5, gibt 120 Teile Natriumchlorid zu und rührt den Ansatz zwei bis drei Stunden weiter. Die ausgesalzene Disazoverbindung wird abfiltriert, mit einer 20%igen wäßrigen Natriumchloridlösung gewaschen und unter reduziertem Druck bei etwa 60°C getrocknet. Man erhält die erfindungsgemäße Disazoverbindung der Formel

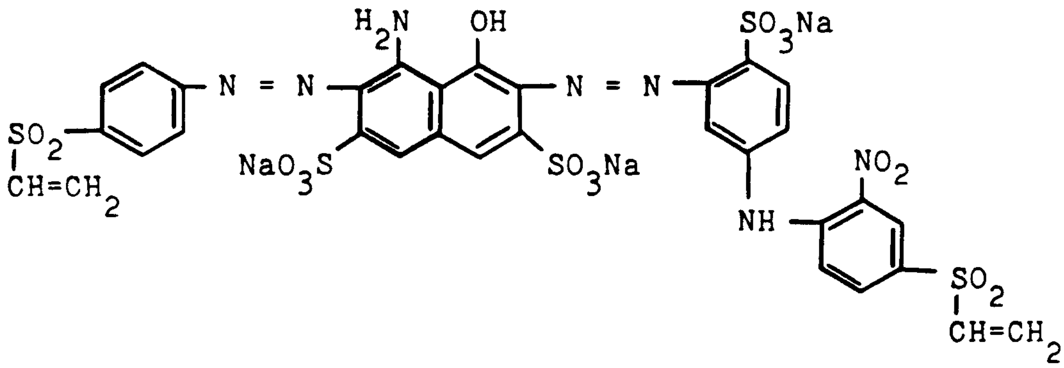

($\lambda_{max}$ = 602 nm)

als elektrolytsalzhaltiges (natriumchloridhaltiges) schwarzes Pulver. Diese erfindungsgemäße Disazoverbindung besitzt ebenfalls sehr gute faserreaktive Farbstoffeigenschaften und liefert gemäß den für faserreaktive Farbstoffe üblichen Anwendungsmethoden marineblaue Färbungen mit den für die erfindungsgemäße Disazoverbindung des Beispieles 1 angegebenen guten Eigenschaften.

**Beispiel 3**

Zu einer Lösung von 36,6 Teilen 4-Vinylsulfonyl-anilin in 500 Teilen Wasser und 65 Teilen einer 31%igen wäßrigen Salzsäure gibt man 250 Teile Eis und anschließend 35 Teile einer 40%igen wäßrigen Natriumnitritlösung. Zu dieser Diazoniumsalzsuspension setzt man, nach Zerstörung überschüssiger salpetriger Säure mittels Amidosulfonsäure, 63 Teile 1-Amino-8-hydroxy-naphthalin-3,6-disulfonsäure hinzu und führt die Kupplungsreaktion unter Rühren bei einer Temperatur zwischen 3 und 8°C noch eine Stunde weiter; schließlich stellt man mittels Natriumbicarbonat den pH-Wert auf 1,5 bis 1,8 und rührt noch weitere drei Stunden bei 5 bis 12°C weiter.

Zu der so hergestellten Suspension der Monoazoverbindung gibt man die im Beispiel 1 beschriebene Lösung der Diazokomponente und führt die Kupplungsreaktion unter den im Beispiel 1 angegebenen Bedingungen durch.

Man isoliert die erfindungsgemäße Disazoverbindung in üblicher Weise, beispielsweise durch Aussalzen mit Natriumchlorid oder durch Eindampfen, wie beispielsweise durch Sprühtrocknung. Man erhält die erfindungsgemäße Disazoverbindung der Formel (in Form der freien Säure geschrieben)

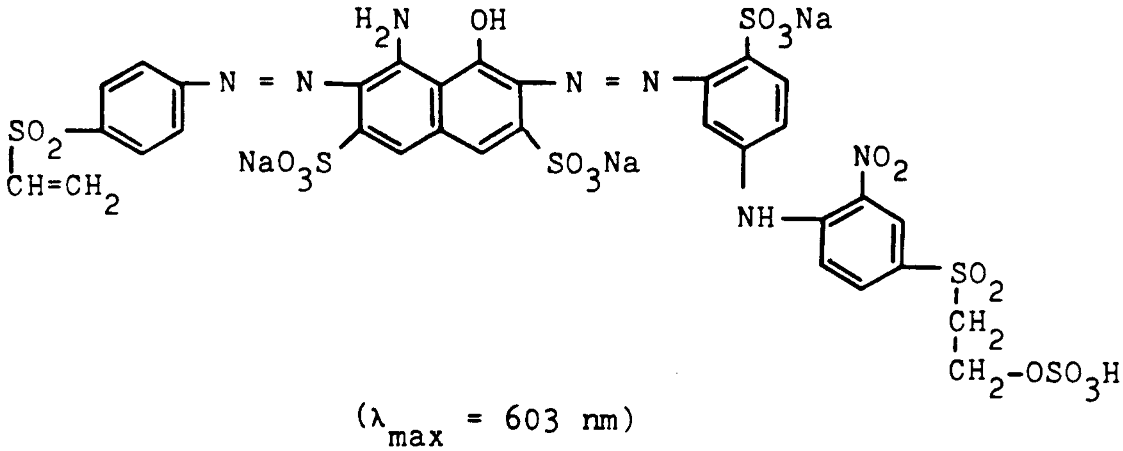

$(\lambda_{max} = 603\ nm)$

als elektrolytsalzhaltiges (wie beispielsweise Natriumchlorid haltiges) schwarzes Pulver. Auch diese erfindungsgemäße Disazoverbindung besitzt sehr gute faserreaktive Farbstoffeigenschaften und liefert beispielsweise auf Baumwolle farbstarke marineblaue Färbungen mit den für die erfindungsgemäße Disazoverbindung des Beispieles 1 angegebenen guten Eigenschaften.

**Beispiele 4 bis 23**

In den nachfolgenden Tabellenbeispielen sind weitere erfindungsgemäße Disazoverbindungen entsprechend einer allgemeinen Formel (A)

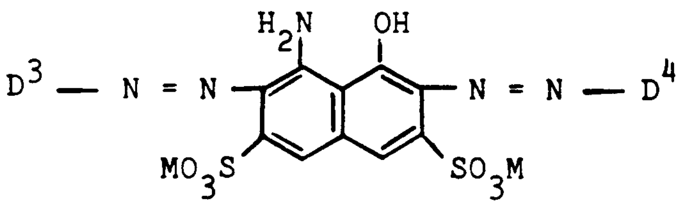

(A)

mit Hilfe ihrer Komponenten beschrieben (wobei M eine der in der Beschreibung genannten Bedeutungen besitzt und vorzugsweise ein Alkalimetall ist). Sie lassen sich in erfindungsgemäßer Weise, wie beispielsweise nach einer der in den vorhergehenden Ausführungsbeispielen beschriebenen Verfahrensweise, aus den aus Formel (A) ersichtlichen Komponenten herstellen. Sie zeigen sehr gute faserreaktive Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheitseigenschaften mit dem in dem jeweiligen Tabellenbeispiel angegebenen Farbton (dort für eine Baumwollfärbung). Die in Klammern befindlichen Zahlen geben das Absorptionsmaximum in nm an.

Disazoverbindung gemäß Formel (A)

| Bsp. | Rest $D^3$- | Rest $D^4$- | Farbton |
|---|---|---|---|
| 4 | 2-Sulfo-4-[2'-nitro-4'-(ß-sulfatoethyl-sulfonyl)-phenyl-amino]-phenyl | 2-Sulfo-4-[2'-nitro-4'-(ß-sulfatoethyl-sulfonyl)-phenyl-amino]-phenyl | marine-blau (623) |
| 5 | 2-Brom-4-(ß-sulfato-ethylsulfonyl)-phenyl | 2-Sulfo-5-[2'-nitro-4'-(ß-sulfatoethyl-sulfonyl)-phenyl-amino]-phenyl | marine-blau (616) |
| 6 | 2-Methoxy-4-(ß-sul-fatoethylsulfonyl)-phenyl | dito | marine-blau (621) |
| 7 | 4-Vinylsulfonyl-phenyl | 2-Sulfo-4-[2'-nitro-4'-(ß-sulfatoethyl-sulfonyl)-phenyl-amino]-phenyl | marine-blau (613) |
| 8 | 2-Chlor-5-(ß-sulfato-ethylsulfonyl)-phenyl | 2-Sulfo-5-[2'-nitro-4'-(ß-sulfatoethyl-sulfonyl)-phenyl-amino]-phenyl | marine-blau (618) |
| 9 | 2-Brom-4-(ß-sulfato-ethylsulfonyl)-phenyl | 2-Sulfo-4-[2'-nitro-4'-(ß-sulfatoethyl-sulfonyl)-phenyl-amino]-phenyl | marine-blau (624) |
| 10 | 2-Sulfo-4-vinylsul-fonyl-phenyl | 2-Sulfo-5-[2'-nitro-4'-(ß-sulfatoethyl-sulfonyl)-phenyl-amino]-phenyl | grünst. marine-blau (622) |
| 11 | 2-Sulfo-4-(ß-sulfato-ethylsulfonyl)-phenyl | 2-Sulfo-4-[2'-nitro-4'-(ß-sulfatoethyl-sulfonyl)-phenyl-amino]-phenyl | grünst. marine-blau (632) |

Disazoverbindung gemäß Formel (A)

| Bsp. | Rest $D^3$- | Rest $D^4$- | Farbton |
|---|---|---|---|
| 12 | 2-Sulfo-4-(ß-sulfato-ethylsulfonyl)-5-methoxy-phenyl | 2-Sulfo-5-[2'-nitro-4'-(ß-sulfatoethyl-sulfonyl)-phenyl-amino]-phenyl | marine-blau (625) |
| 13 | 4-(ß-Sulfatoethyl-sulfonyl)-2-methoxy-5-methyl-phenyl | 2-Sulfo-4-[2'-nitro-4'-(ß-sulfatoethyl-sulfonyl)-phenyl-amino]-phenyl | marine-blau (635) |
| 14 | 4-Sulfo-phenyl | 2-Sulfo-5-[2'-nitro-4'-(ß-sulfatoethyl-sulfonyl)-phenyl-amino]-phenyl | marine-blau (593) |
| 15 | 4-Sulfo-phenyl | 2-Sulfo-4-[2'-nitro-4'-(ß-sulfatoethyl-sulfonyl)-phenyl-amino]-phenyl | marine-blau (603) |
| 16 | 2-Sulfo-4-chlor-phenyl | 2-Sulfo-5-[2'-nitro-4'-(ß-sulfatoethyl-sulfonyl)-phenyl-amino]-phenyl | marine-blau (603) |
| 17 | 2-Sulfo-phenyl | dito | marine-blau (598) |
| 18 | 2-Chlor-4-(ß-sul-fatoethylsulfonyl)-phenyl | dito | marine-blau (615) |
| 19 | 2,6-Dibrom-4-(ß-sul-fatoethylsulfonyl)-phenyl | 2-Sulfo-4-[2'-nitro-4'-(ß-sulfatoethyl-sulfonyl)-phenyl-amino]-phenyl | rotstichig marine-blau (582) |
| 20 | 2,5-Disulfo-phenyl | 2-Sulfo-5-[2'-nitro-4'-(ß-sulfatoethyl-sulfonyl)-phenyl-amino]-phenyl | marine-blau (606) |
| 21 | 2,5-Disulfo-phenyl | 2-Sulfo-4-[2'-nitro-4'-(ß-sulfatoethyl-sulfonyl)-phenyl-amino]-phenyl | marine-blau (617) |

Disazoverbindung gemäß Formel (A)

| Bsp. | Rest $D^3$- | Rest $D^4$- | Farbton |
|---|---|---|---|
| 22 | 2-Sulfo-4-methyl-phenyl | 2-Sulfo-5-[2'-nitro-4'-(ß-sulfatoethyl-sulfonyl)-phenyl-amino]-phenyl | marine-blau (598) |
| 23 | 2-Sulfo-5-[2'-nitro-4'-(ß-sulfatoethyl-sulfonyl)-phenyl-amino]-phenyl | dito | marine-blau (615) |

## Patentansprüche

### Patentansprüche für folgende Vertragsstaaten : BE, CH, LI, DE, FR, GB, IT

**1.** Eine Disazoverbindung entsprechend der allgemeinen Formel (1)

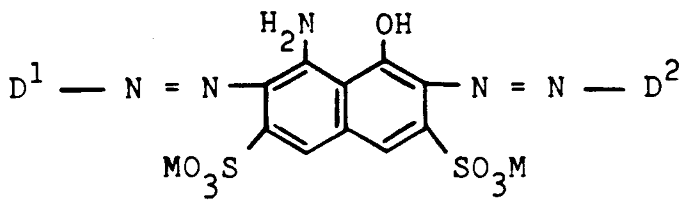

(1)

in welcher bedeuten:

M ist ein Wasserstoffatom oder ein Alkalimetall oder das Äquivalent eines Erdalkalimetalls, bevorzugt ein Wasserstoffatom oder ein Alkalimetall;

$D^1$ ist ein Rest der allgemeinen Formel (2)

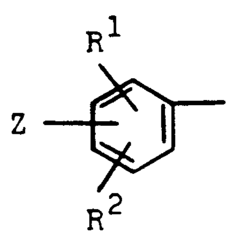

(2)

in welcher

$R^1$ ein Wasserstoff-, Chlor- oder Bromatom oder eine Sulfogruppe, eine Alkylgruppe von 1 bis 4 C-Atomen oder eine Alkoxygruppe von 1 bis 4 C-Atomen ist,

$R^2$ ein Wasserstoff-, Chlor- oder Bromatom oder eine Sulfogruppe, eine Alkylgruppe von 1 bis 4 C-Atomen oder eine Alkoxygruppe von 1 bis 4 C-Atomen ist und

Z eine Gruppe der allgemeinen Formel $X\text{-}SO_2$- ist, in welcher

X die Vinylgruppe oder eine $\beta$-Sulfatoethyl-Gruppe bedeutet, oder

Z ein Wasserstoffatom oder eine Sulfogruppe oder eine Gruppe der allgemeinen Formel (3)

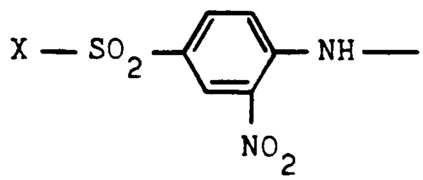

(3)

bedeutet, in welcher X eine der obigen Bedeutungen besitzt;

$D^2$ ist ein Rest der allgemeinen Formel (4)

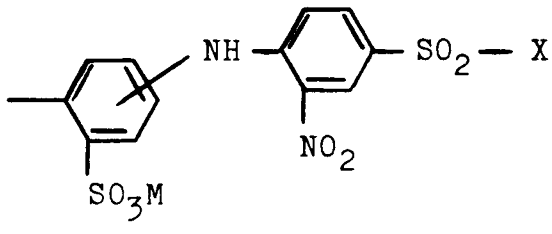

(4)

in welcher M und X eine der obengenannten Bedeutungen besitzt und die Aminogruppe -NH- an den Benzolkern in para-Stellung zur Sulfogruppe $-SO_3M$ oder in para-Stellung zur freien Bindung gebunden ist;

die Formelglieder $D^1$ und $D^2$ und ebenso die Formelglieder $R^1$ und $R^2$ sowie die beiden X können jeweils zueinander gleiche oder voneinander verschiedene Bedeutungen besitzen.

**2.** Verbindung nach Anspruch 1, dadurch gekennzeichnet, daß $D^1$ ein Rest der allgemeinen Formel (2) ist, in welcher Z für die Gruppe der Formel $X\text{-}SO_2\text{-}$ steht.

**3.** Verbindung nach Anspruch 1, dadurch gekennzeichnet, daß $D^1$ ein Rest der allgemeinen Formel (2a)

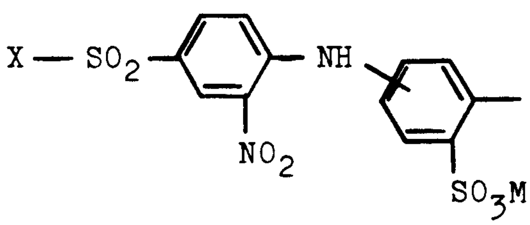

(2a)

ist, in welcher M und X eine der in Anspruch 1 genannten Bedeutungen haben und die Aminogruppe -NH- an den Benzolkern in para-Stellung zur Sulfogruppe $-SO_3M$ oder in para-Stellung zur freien Bindung gebunden ist.

**4.** Verbindung nach einem oder mehreren der Ansprüche 1 bis 3, dadurch gekennzeichnet, daß Z für eine $\beta$-Sulfatoethyl-Gruppe steht.

**5.** Verbindung nach Anspruch 1, dadurch gekennzeichnet, daß $D^1$ ein Rest der allgemeinen Formel (2) ist, in welcher Z für die Gruppe der Formel $X\text{-}SO_2\text{-}$ steht, worin X die in Anspruch 1 genannte Bedeutung besitzt und bevorzugt eine $\beta$-Sulfatoethyl-Gruppe ist, und $R^1$ ein Wasserstoffatom oder eine Methoxygruppe und $R^2$ ein Wasserstoffatom oder ein Chloratom oder eine Methyl- oder Methoxygruppe bedeutet.

**6.** Verbindung nach Anspruch 1, dadurch gekennzeichnet, daß $D^1$ eine 4-($\beta$-Sulfatoethylsulfonyl)-phenyl-Gruppe und $D^2$ eine 2-Sulfo-5-[2'-nitro-4'-($\beta$-sulfatoethylsulfonyl)-phenylamino]-phenyl-Gruppe ist.

**7.** Verfahren zur Herstellung einer Disazoverbindung der in Anspruch 1 genannten und definierten allgemeinen Formel (1), dadurch gekennzeichnet, daß man eine Monoazoverbindung der allgemeinen

Formel (5)

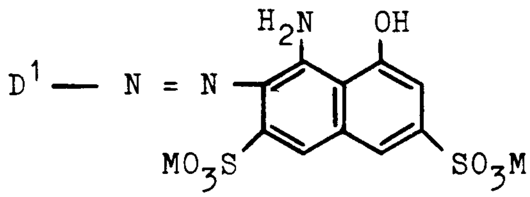

(5)

in welcher $D^1$ und M die in Anspruch 1 genannten Bedeutungen haben, mit einem Diazoniumsalz eines aromatischen Amins der allgemeinen Formel $D^2$-$NH_2$ mit $D^2$ der in Anspruch 1 genannten Bedeutung bei einem pH-Wert zwischen 4 und 7,5 kuppelt,
oder daß man zur Herstellung einer Disazoverbindung der allgemeinen Formel (1), in welcher $D^1$, $D^2$ und M die obengenannten Bedeutungen haben, der/die Formelrest(e) Z jedoch jeweils die Vinylgruppe bedeuten, eine Disazoverbindung der allgemeinen Formel (1) mit der obengenannten Bedeutung, in welcher jedoch eines oder beide der Formelreste Z für die β-Sulfatoethyl-Gruppe steht, in wäßrigem Medium bei einem pH-Wert zwischen 10 und 12 mit einem Alkali bei einer Temperatur zwischen 15 und 50 °C umsetzt.

**8.** Verwendung einer Verbindung entsprechend der Formel (1) gemäß einem oder mehreren der Ansprüche 1 bis 8 zum Färben von hydroxy- und/oder carbonamidgruppenhaltigem Material, insbesondere Fasermaterial.

**9.** Verfahren zum Färben von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 8 einsetzt.

**Patentansprüche für folgenden Vertragsstaat : ES**

**1.** Verfahren zur Herstellung einer Disazoverbindung entsprechend der allgemeinen Formel (1)

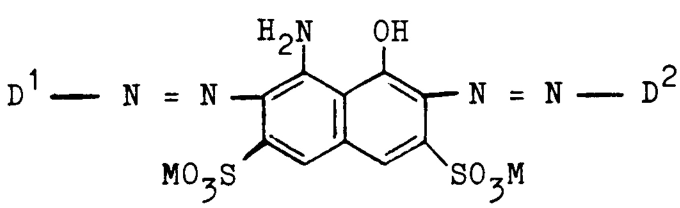

(1)

in welcher bedeuten:

M ist ein Wasserstoffatom oder ein Alkalimetall oder das Äquivalent eines Erdalkalimetalls, bevorzugt ein Wasserstoffatom oder ein Alkalimetall;

$D^1$ ist ein Rest der allgemeinen Formel (2)

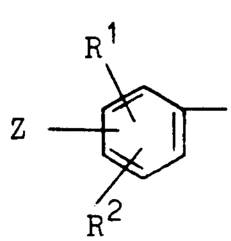

(2)

in welcher

$R^1$ ein Wasserstoff-, Chlor- oder Bromatom oder eine Sulfogruppe, eine Alkylgruppe von 1 bis 4 C-Atomen oder eine Alkoxygruppe von 1 bis 4 C-Atomen ist,

$R^2$ ein Wasserstoff-, Chlor- oder Bromatom oder eine Sulfogruppe, eine Alkylgruppe von 1 bis 4 C-Atomen oder eine Alkoxygruppe von 1 bis 4 C-Atomen ist und

Z eine Gruppe der allgemeinen Formel X-$SO_2$- ist, in welcher

X die Vinylgruppe oder eine β-Sulfatoethyl-Gruppe bedeutet, oder

Z ein Wasserstoffatom oder eine Sulfogruppe oder eine Gruppe der allgemeinen Formel (3)

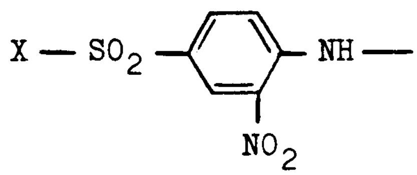

(3)

bedeutet, in welcher X eine der obigen Bedeutungen besitzt;

$D^2$ ist ein Rest der allgemeinen Formel (4)

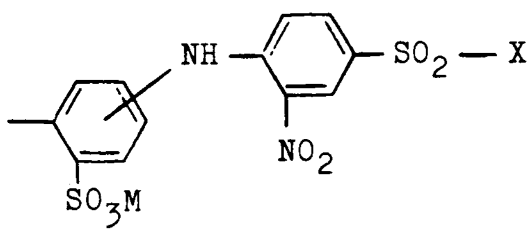

(4)

in welcher M und X eine der obengenannten Bedeutungen besitzt und die Aminogruppe -NH- an den Benzolkern in para-Stellung zur Sulfogruppe -$SO_3M$ oder in para-Stellung zur freien Bindung gebunden ist;

die Formelglieder $D^1$ und $D^2$ und ebenso die Formelglieder $R^1$ und $R^2$ sowie die beiden X können jeweils zueinander gleiche oder voneinander verschiedene Bedeutungen besitzen,

dadurch gekennzeichnet, daß man eine Monoazoverbindung der allgemeinen Formel (5)

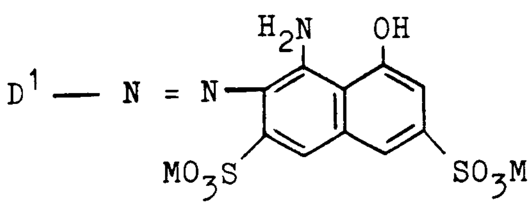

(5)

in welcher $D^1$ und M die obengenannten Bedeutung besitzen, mit einem Diazoniumsalz eines aromatischen Amins der allgemeinen Formel $D^2$-$NH_2$ mit $D^2$ der obengenannten Bedeutung bei einem pH-Wert zwischen 4 und 7,5 kuppelt, oder daß man zur Herstellung einer Disazoverbindung der allgemeinen Formel (1), in welcher $D^1$, $D^2$ und M die obengenannten Bedeutungen haben, der/die Formelrest(e) Z jedoch jeweils die Vinylgruppe bedeuten, eine Disazoverbindung der allgemeinen Formel (1) mit der obengenannten Bedeutung, in welcher jedoch eines oder beide der Formelreste Z für die β-Sulfatoethyl-Gruppe steht, in wäßrigem Medium bei einem pH-Wert zwischen 10 und 12 mit einem Alkali bei einer Temperatur zwischen 15 und 50 °C umsetzt.

**2.** Verfahren nach Anspruch 1, dadurch gekennzeichnet, daß $D^1$ ein Rest der allgemeinen Formel (2) ist, in welcher Z für die Gruppe der Formel X-$SO_2$- steht.

3. Verfahren nach Anspruch 1, dadurch gekennzeichnet, daß $D^1$ ein Rest der allgemeinen Formel (2a)

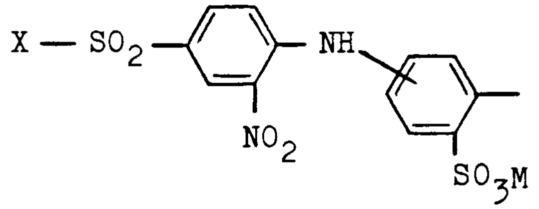

(2a)

ist, in welcher M und X eine der in Anspruch 1 genannten Bedeutungen haben und die Aminogruppe -NH- an den Benzolkern in para-Stellung zur Sulfogruppe $-SO_3M$ oder in para-Stellung zur freien Bindung gebunden ist.

4. Verfahren nach einem oder mehreren der Ansprüche 1 bis 3, dadurch gekennzeichnet, daß Z für eine $\beta$-Sulfatoethyl-Gruppe steht.

5. Verfahren nach Anspruch 1, dadurch gekennzeichnet, daß $D^1$ ein Rest der allgemeinen Formel (2) ist, in welcher Z für die Gruppe der Formel $X\text{-}SO_2\text{-}$ steht, worin X die in Anspruch 1 genannte Bedeutung besitzt und bevorzugt eine $\beta$-Sulfatoethyl-Gruppe ist, und $R^1$ ein Wasserstoffatom oder eine Methoxygruppe und $R^2$ ein Wasserstoffatom oder ein Chloratom oder eine Methyl- oder Methoxygruppe bedeutet.

6. Verfahren nach Anspruch 1, dadurch gekennzeichnet, daß $D^1$ eine 4-($\beta$-Sulfatoethylsulfonyl)-phenyl-Gruppe und $D^2$ eine 2-Sulfo-5- 2'-nitro-4'-($\beta$-sulfatoethylsulfonyl)-phenylamino -phenyl-Gruppe ist.

7. Verwendung einer Verbindung entsprechend der Formel (1) gemäß einem oder mehreren der Ansprüche 1 bis 6 zum Färben von hydroxy- und/oder carbonamidgruppenhaltigem Material, insbesondere Fasermaterial.

8. Verfahren zum Färben von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 6 einsetzt.

**Claims**

**Claims for the following Contracting States : BE, CH, LI, DE, FR, GB, IT**

1. A disazo compound conforming to the formula (1)

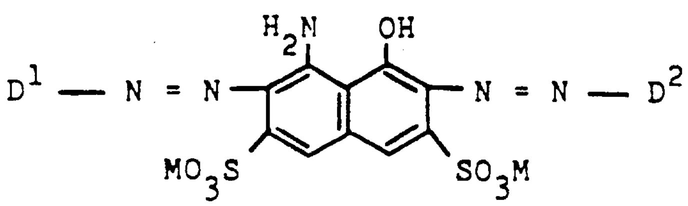

(1)

in which

M  is a hydrogen atom or an alkali metal or is the equivalent of an alkaline earth metal, preferably a hydrogen atom or an alkali metal;

$D^1$  is a radical of the formula (2)

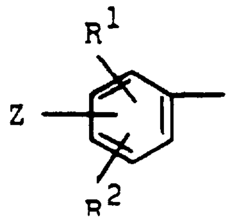

(2)

in which

- $R^1$ is a hydrogen, chlorine or bromine atom or is a sulfo group, an alkyl group of 1 to 4 carbon atoms or is an alkoxy group of 1 to 4 carbon atoms,
- $R^2$ is a hydrogen, chlorine or bromine atom or is a sulfo group, an alkyl group of 1 to 4 carbon atoms or is an alkoxy group of 1 to 4 carbon atoms and
- Z is a group of the formula $X\text{-}SO_2\text{-}$ in which
- X denotes the vinyl group or a β-sulfatoethyl group, or
- Z is a hydrogen atom or a sulfo group or a group of the formula (3)

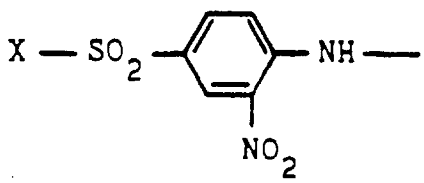

(3)

in which X has one of the above meanings;

- $D^2$ is a radical of the formula (4)

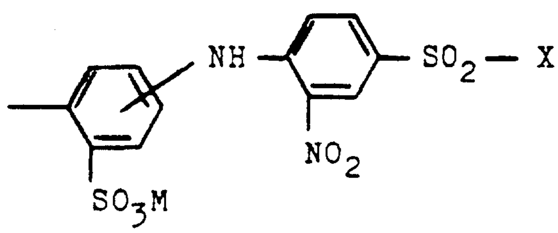

(4)

in which M and X have one of the abovementioned meanings and the amino group -NH- is bound to the benzene ring in the para-position with respect to the sulfo group $-SO_3M$ or in the para-position with respect to the free bond; the formula members $D^1$ and $D^2$ and also the formula members $R^1$ and $R^2$ and also the two X can each have meanings identical to one another or different from one another.

2. A compound as claimed in claim 1, wherein $D^1$ is a radical of the formula (2) in which Z stands for the group of the formula $X\text{-}SO_2\text{-}$.

3. A compound as claimed in claim 1, wherein $D^1$ is a radical of the formula (2a)

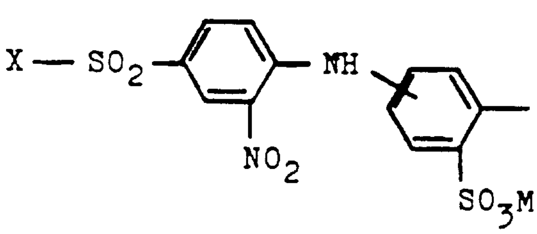

(2a)

in which M and X have one of the meanings mentioned in claim 1 and the amino group -NH- is bound to the benzene ring in the para-position with respect to the sulfo group $-SO_3M$ or in the para-position with respect to the free bond.

**4.** A compound as claimed in one or more of claims 1 to 3, wherein Z stands for a $\beta$-sulfatoethyl group.

**5.** A compound as claimed in claim 1, wherein $D^1$ is a radical of the formula (2) in which Z stands for the group of the formula $X-SO_2-$ in which X has the meaning mentioned in claim 1 and is preferably a $\beta$-sulfatoethyl group, and $R^1$ is a hydrogen atom or a methoxy group and $R^2$ is a hydrogen atom or a chlorine atom or a methyl group or methoxy group.

**6.** A compound as claimed in claim 1, wherein $D^1$ is a 4-($\beta$-sulfatoethylsulfonyl)phenyl group and $D^2$ is a 2-sulfo-5-[2'-nitro-4'-($\beta$-sulfatoethylsulfonyl)phenylamino]phenyl group.

**7.** A process for the preparation of a disazo compound of the formula (1) mentioned and defined in claim 1, which comprises coupling a monoazo compound of the formula (5)

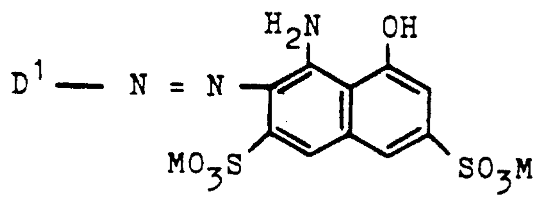

(5)

in which $D^1$ and M have the meanings mentioned in claim 1 with a diazonium salt of an aromatic amine of the formula $D^2-NH_2$, where $D^2$ has the meaning mentioned in claim 1, at a pH between 4 and 7.5, or, for preparing a disazo compound of the formula (1) in which $D^1$, $D^2$ and M have the abovementioned meanings, the formula radical(s) Z, however, each denoting the vinyl group, comprises reacting a disazo compound of the formula (1) having the abovementioned meaning, but in which one or both formula radicals Z stand for the $\beta$-sulfatoethyl group, in an aqueous medium at a pH between 10 and 12 with an alkali at a temperature between 15 and 50 °C.

**8.** The use of a compound conforming to the formula (1) as claimed in one or more of claims 1 to 8 for dyeing hydroxyl- and/or carboxamido-containing material, in particular fiber material.

**9.** A process for dyeing hydroxyl- and/or carboxamido-containing material, in particular fiber material, in which a dye is applied to or introduced into the material and fixed by means of heat and/or by means of an acid-binding compound, which comprises using as dye a compound conforming to the formula (1) as in one or more of claims 1 to 8.

**Claims for the following Contracting State : ES**

**1.** A process for the preparation of a disazo compound conforming to the formula (1)

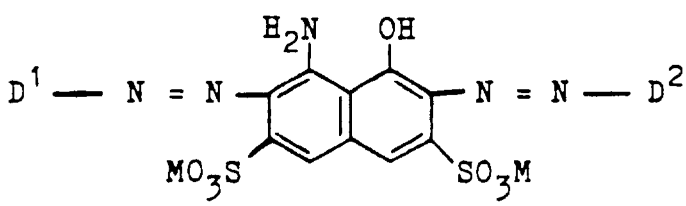

(1)

in which

M is a hydrogen atom or an alkali metal or is the equivalent of an alkaline earth metal, preferably a hydrogen atom or an alkali metal;

$D^1$ is a radical of the formula (2)

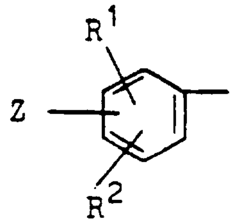

(2)

in which

$R^1$ is a hydrogen, chlorine or bromine atom or is a sulfo group, an alkyl group of 1 to 4 carbon atoms or is an alkoxy group of 1 to 4 carbon atoms,

$R^2$ is a hydrogen, chlorine or bromine atom or is a sulfo group, an alkyl group of 1 to 4 carbon atoms or is an alkoxy group of 1 to 4 carbon atoms and

Z is a group of the formula $X\text{-}SO_2\text{-}$ in which

X denotes the vinyl group or a $\beta$-sulfatoethyl group, or

Z is a hydrogen atom or a sulfo group or a group of the formula (3)

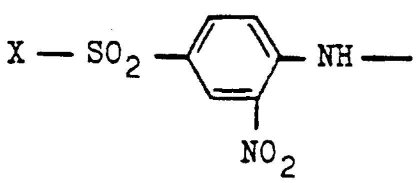

(3)

in which X has one of the above meanings;

$D^2$ is a radical of the formula (4)

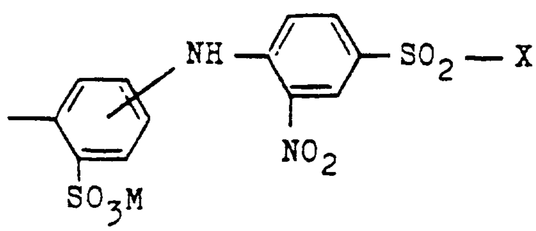

(4)

in which M and X have one of the abovementioned meanings and the amino group -NH- is bound to the benzene ring in the para-position with respect to the sulfo group $-SO_3M$ or in the para-position with respect to the free bond; the formula members $D^1$ and $D^2$ and also the formula members $R^1$ and $R^2$ and also the two X can each have meanings identical to one another or different from one another, which comprises coupling a monoazo compound of the formula (5)

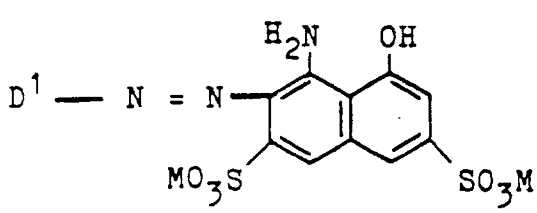

(5)

in which $D^1$ and M have the abovementioned meanings with a diazonium salt of an aromatic amine of the formula $D^2\text{-}NH_2$, where $D^2$ has the abovementioned meaning, at a pH between 4 and 7.5, or, for preparing a disazo compound of the formula (1) in which $D^1$, $D^2$ and M have the abovementioned meanings, the formula radical(s) Z, however, each denoting the vinyl group, comprises reacting a disazo compound of the formula (1) having the abovementioned meaning, but in which one or both formula radicals Z stand for the $\beta$-sulfatoethyl group, in an aqueous medium at a pH between 10 and

12 with an alkali at a temperature between 15 and 50 °C.

2. The process as claimed in claim 1, wherein $D^1$ is a radical of the formula (2) in which Z stands for the group of the formula X-$SO_2$-.

3. The process as claimed in claim 1, wherein $D^1$ is a radical of the formula (2a)

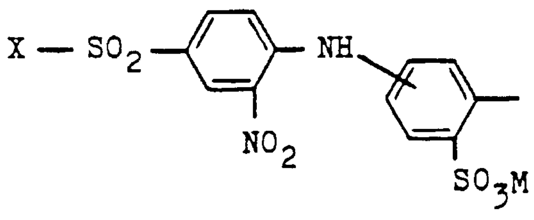

(2a)

in which M and X have one of the meanings mentioned in claim 1 and the amino group -NH- is bound to the benzene ring in the para-position with respect to the sulfo group -$SO_3$M or in the para-position with respect to the free bond.

4. The process as claimed in one or more of claims 1 to 3, wherein Z stands for a β-sulfatoethyl group.

5. The process as claimed in claim 1, wherein $D^1$ is a radical of the formula (2) in which Z stands for the group of the formula X-$SO_2$- in which X has the meaning mentioned in claim 1 and is preferably a β-sulfatoethyl group, and $R^1$ is a hydrogen atom or a methoxy group and $R^2$ is a hydrogen atom or a chlorine atom or a methyl group or methoxy group.

6. The process as claimed in claim 1, wherein $D^1$ is a 4-(β-sulfatoethylsulfonyl)phenyl group and $D^2$ is a 2-sulfo-5-[2'-nitro-4'-(β-sulfatoethylsulfonyl)phenylamino]phenyl group.

7. The use of a compound conforming to the formula (1) as in one or more of claims 1 to 6 for dyeing hydroxyl and/or carboxamido-containing material, in particular fiber material.

8. A process for dyeing hydroxyl- and/or carboxamido-containing material, in particular fiber material, in which a dye is applied to or introduced into the material and fixed by means of heat and/or by means of an acid-binding compound, which comprises using as dye a compound conforming to the formula (1) in one or more of claims 1 to 6.

**Revendications**

**Revendications pour les Etats contractants suivants : BE, CH, LI, DE, FR, GB, IT**

1. Composé disasoïque de formule générale (1)

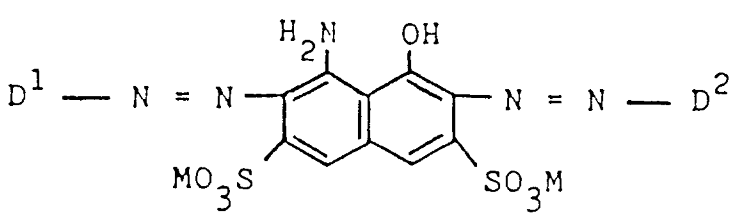

(1)

dans laquelle

M est un atome d'hydrogène ou un métal alcalin ou l'équivalent d'un métal alcalino-terreux, de préférence un atome d'hydrogène ou un métal alcalin ;

$D^1$ est un résidu de formule générale (2)

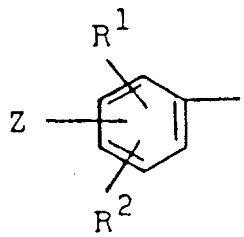

(2)

dans laquelle

$R^1$ est un atome d'hydrogène, de chlore ou de brome, ou un groupe sulfo, un groupe alkyle ayant de 1 à 4 atomes de carbone ou un groupe alcoxy ayant de 1 à 4 atomes de carbone,

$R^2$ est un atome d'hydrogène, de chlore ou de brome, ou un groupe sulfo, un groupe alkyle ayant de 1 à 4 atomes de carbone ou un groupe alcoxy ayant de 1 à 4 atomes de carbone, et

Z est un groupe de formule générale $X\text{-}SO_2\text{-}$, dans laquelle

X est le groupe vinyle ou un groupe bêta-sulfatoéthyle, ou

Z est un atome d'hydrogène, un groupe sulfo ou encore un groupe de formule générale (3)

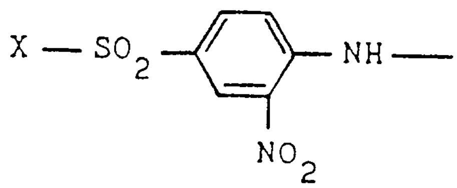

(3)

dans laquelle X a l'une des significations données ci-dessus ;

$D^2$ est un résidu de formule générale (4)

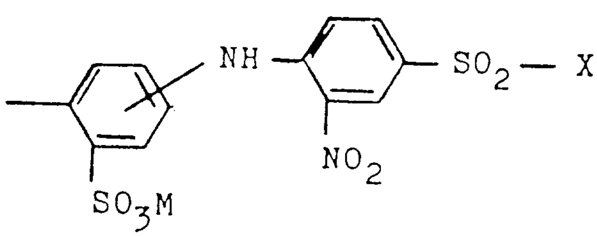

(4)

dans laquelle M et X ont l'une des significations données ci-dessus, et le groupe amino -NH- est fixé au noyau benzénique en position para par rapport au groupe sulfo $-SO_3M$ ou en position para par rapport à la liaison libre ;

les éléments $D^1$ et $D^2$, ainsi que les éléments $R^1$ et $R^2$ des formules ci-dessus, ainsi que les deux radicaux X, pouvant, dans chaque paire, avoir des significations identiques ou différentes.

**2.** Composé selon la revendication 1, caractérisé en ce que $D^1$ est un résidu de formule générale (2) dans laquelle Z est le groupe de formule $X\text{-}SO_2\text{-}$.

**3.** Composé selon la revendication 1, caractérisé en ce que $D^1$ est un résidu de formule générale (2a)

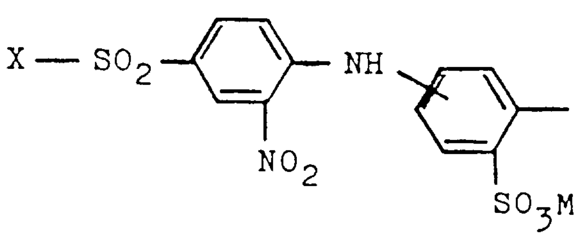

(2a)

dans laquelle M et X ont l'une des significations données dans la revendication 1, et le groupe amino -NH- est lié au noyau benzénique en position para par rapport au groupe sulfo $-SO_3M$ ou en position para par rapport à la liaison libre.

4. Composé selon l'une ou plusieurs des revendications 1 à 3, caractérisé en ce que Z est un groupe bêta-sulfatoéthyle.

5. Composé selon la revendication 1, caractérisé en ce que $D^1$ est un résidu de formule générale (2) dans laquelle Z est le groupe de formule $X-SO_2-$, où X a les significations données dans la revendication 1 et représente, de préférence, un groupe bêta-sulfatoéthyle, et $R^1$ est un atome d'hydrogène ou un groupe méthoxy, $R^2$ étant un atome d'hydrogène ou un atome de chore ou un groupe méthyle ou méthoxy.

6. Composé selon la revendication 1, caractérisé en ce que $D^1$ est un groupe 4-(bêta-sulfatoéthylsulfonyl)-phényle et $D^2$ est un groupe 2-sulfo-5-[2'-nitro-4'-(bêta-sulfatoéthylsulfonyl)-phénylamino]-phényle.

7. Procédé pour préparer un composé disazoïque ayant la formule générale (1) donnée et définie dans la revendication 1, caractérisé en ce qu'on copule un composé monoazoïque de formule générale (5)

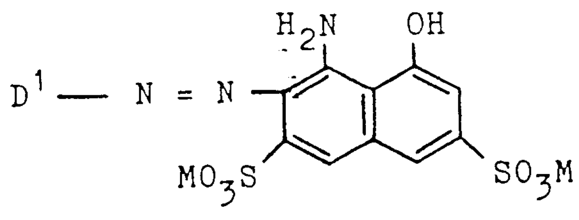

(5)

dans laquelle $D^1$ et M ont les significations données dans la revendication 1, avec un sel de diazonium d'une amine aromatique de formule générale $D^2-NH_2$, $D^2$ ayant les significations données dans la revendication 1, la copulation s'effectuant à pH compris entre 4 et 7,5,

ou en ce que, pour préparer un composé disazoïque de formule générale (1) dans laquelle $D^1$, $D^2$ et M ont les significations données ci-dessus, le ou les résidus Z représentant cependant chacun un groupe vinyle, on fait réagir avec un alcali en milieu aqueux à pH compris entre 10 et 12, à une température de 15 à 50 °C, un compose disazoïque de formule générale (1) ayant les significations données ci-dessus, mais dans lequel l'un des résidus Z, ou les deux, représentent chacun un groupe bêta-sulfatoéthyle.

8. Utilisation d'un composé de formule (1) selon l'une ou plusieurs des revendications 1 à 7, pour teindre un matériau contenant des groupes hydroxy ou carboxamido, de préférence un matériau fibreux.

9. Procédé pour teindre un matériau hydroxylé ou contenant des groupes carboxamido, notamment un matériau fibreux, dans lequel on applique un colorant sur le matériau ou on l'introduit dans ce dernier, et on le fixe à l'aide de chaleur et/ou d'un composé fixant les acides, caractérisé en ce qu'on utilise comme colorant un composé de formule (1) selon l'une ou plusieurs des revendications 1 à 8.

**Revendications pour l'Etat contractant suivant : ES**

1. Procédé pour préparer un composé disasoïque de formule générale (1)

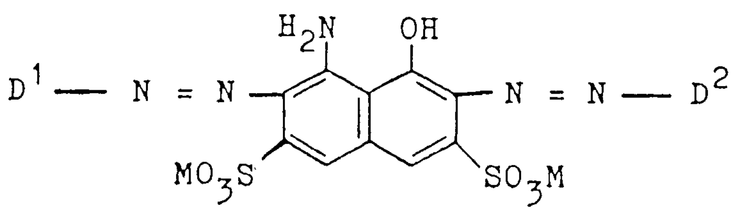

(1)

dans laquelle

M est un atome d'hydrogène ou un métal alcalin ou l'équivalent d'un métal alcalino-terreux, de préférence un atome d'hydrogène ou un métal alcalin ;

$D^1$ est un résidu de formule générale (2)

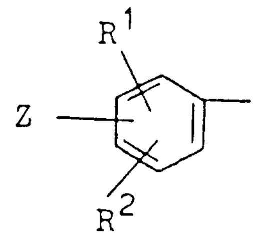

(2)

dans laquelle

$R^1$ est un atome d'hydrogène, de chlore ou de brome, ou un groupe sulfo, un groupe alkyle ayant de 1 à 4 atomes de carbone ou un groupe alcoxy ayant de 1 à 4 atomes de carbone,

$R^2$ est un atome d'hydrogène, de chlore ou de brome, ou un groupe sulfo, un groupe alkyle ayant de 1 à 4 atomes de carbone ou un groupe alcoxy ayant de 1 à 4 atomes de carbone, et

Z est un groupe de formule générale $X\text{-}SO_2\text{-}$, dans laquelle

X est le groupe vinyle ou un groupe bêta-sulfatoéthyle, ou

Z est un atome d'hydrogène, un groupe sulfo ou encore un groupe de formule générale (3)

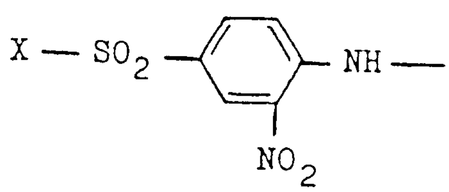

(3)

dans laquelle X a l'une des significations données ci-dessus ;

$D^2$ est un résidu de formule générale (4)

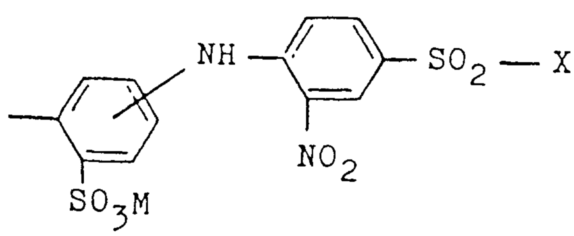

(4)

dans laquelle M et X ont l'une des significations données ci-dessus, et le groupe amino -NH- est fixé au noyau benzénique en position para par rapport au groupe sulfo $-SO_3M$ ou en position para par rapport à la liaison libre ;

les éléments $D^1$ et $D^2$, ainsi que les éléments $R^1$ et $R^2$ des formules ci-dessus, ainsi que les deux radicaux X, pouvant, dans chaque paire, avoir des significations identiques ou différentes.

caractérisé en ce qu'on copule un composé monoazoïque de formule générale (5)

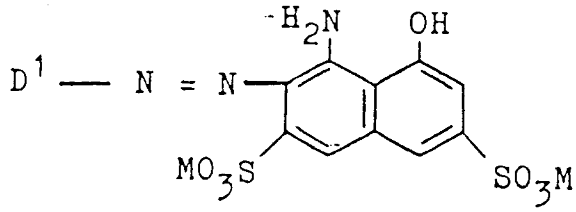

(5)

dans laquelle $D^1$ et M ont les significations données ci-dessus, avec un sel de diazonium d'une amine aromatique de formule générale $D^2$-$NH_2$, $D^2$ ayant les significations données dans la revendication 1, la copulation s'effectuant à pH compris entre 4 et 7,5,

ou en ce que, pour préparer un composé disazoïque de formule générale (1) dans laquelle $D^1$, $D^2$ et M ont les significations données ci-dessus, le ou les résidus Z représentant cependant chacun un groupe vinyle, on fait réagir avec un alcali en milieu aqueux à pH compris entre 10 et 12, à une température de 15 à 50 ° C, un composé disazoïque de formule générale (1) ayant les significations données ci-dessus, mais dans lequel l'un des résidus Z, ou les deux, représentent chacun un groupe bêta-sulfatoéthyle.

2. Procédé selon la revendication 1, caractérisé en ce que $D^1$ est un résidu de formule générale (2) dans laquelle Z est le groupe de formule X-$SO_2$-.

3. Procédé selon la revendication 1, caractérisé en ce que $D^1$ est un résidu de formule générale (2a)

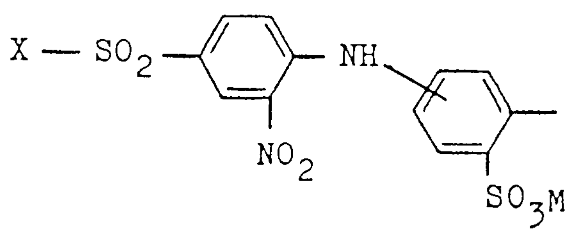

(2a)

dans laquelle M et X ont l'une des significations données dans la revendication 1, et le groupe amino -NH- est lié au noyau benzénique en position para par rapport au groupe sulfo -$SO_3$M ou en position para par rapport à la liaison libre.

4. Procédé selon l'une ou plusieurs des revendications 1 à 3, caractérisé en ce que Z est un groupe bêta-sulfatoéthyle.

5. Procédé selon la revendication 1, caractérisé en ce que $D^1$ est un résidu de formule générale (2) dans laquelle Z est le groupe de formule X-$SO_2$-, où X a les significations données dans la revendication 1 et représente, de préférence, un groupe bêta-sulfatoéthyle, et $R^1$ est un atome d'hydrogène ou un groupe méthoxy, $R^2$ étant un atome d'hydrogène ou un atome de chlore ou un groupe méthyle ou méthoxy.

6. Procédé selon la revendication 1, caractérisé en ce que $D^1$ est un groupe 4-(bêta-sulfatoéthylsulfonyl)-phényle et $D^2$ est un groupe 2-sulfo-5-[2'-nitro-4'-(bêta-sulfatoéthylsulfonyl)-phénylamino]-phényle.

7. Utilisation d'un composé de formule (1) selon l'une ou plusieurs des revendications 1 à 6, pour teindre un matériau contenant ds groupes hydroxy ou carboxamido, de préférence un matériau fibreux.

8. Procédé pour teindre un matériau hydroxylé ou contenant des groupes carboxamido, notamment un matériau fibreux, dans lequel on applique un colorant sur le matériau ou on l'introduit dans ce dernier, et on le fixe à l'aide de chaleur et/ou d'un composé fixant les acides, caractérisé en ce qu'on utilise comme colorant un composé de formule (1) selon l'une ou plusieurs des revendications 1 à 6.